# EUROPEAN PATENT APPLICATION

(11) **EP 4 679 674 A1**
(43) Date of publication of application: **14.01.2026**
(21) Application number: 23962759.9
(22) Date of filing: 29.12.2023
(51) Int. Cl.: H02J 50/10

(54) **WIRELESS ELECTRIC-ENERGY RECEIVING CIRCUIT, WIRELESS CHARGING DEVICE, AND SYSTEM**

(71) Applicant: Huawei Technologies Co., Ltd., Shenzhen, Guangdong 518129 (CN)
(72) Inventor: LI, Yuechao, Shenzhen, Guangdong 518129 (CN); FANG, Yaoran, Shenzhen, Guangdong 518129 (CN); WANG, Chao, Shenzhen, Guangdong 518129 (CN); CHEN, Gang, Shenzhen, Guangdong 518129 (CN); WANG, Yong, Shenzhen, Guangdong 518129 (CN)
(74) Representative: Grünecker Patent- und Rechtsanwälte PartG mbB
(86) International application number: PCT/CN2023/143133
(87) International publication number: WO 2025/138081

(57) **Abstract**

Embodiments of this application provide a wireless power receiving circuit, including a receiver coil, a matching circuit, a rectifier circuit, a controller, and an output end, where the rectifier circuit includes at least one switching unit. The receiver coil is configured to: receive energy, and output an alternating current. The matching circuit is configured to: perform matching on the alternating current, and transmit the alternating current to an input end of the rectifier circuit. The rectifier circuit is configured to convert the input alternating current into a direct current. The controller is configured to: determine a duty cycle of the at least one switching unit based on an output voltage of the voltage output end, and control turn-on or turn-off of the at least one switching unit based on the duty cycle, to perform voltage regulation on the output voltage, where the duty cycle is irrelevant to a main frequency of the wireless power receiving circuit.

## Description

### TECHNICAL FIELD

Embodiments of this application relate to the electronic device field and the wireless charging field, and more specifically, to a wireless power receiving circuit, a wireless charging device, and a system.

### BACKGROUND

Power limits of mobile or portable wireless charging devices such as mobile phones gradually increase. Therefore, wireless charging power needs to be increased to shorten charging time, so as to improve charging experience of users. However, because a heat dissipation capability of a terminal device is limited, efficiency of a receive end of wireless charging needs to be further improved to support higher wireless charging power.

In a conventional technology, an output voltage is regulated through pulse modulation. However, a modulation frequency of the pulse modulation is generated based on a main frequency of wireless charging, and the main frequency needs to be detected. Consequently, continuous voltage regulation is not supported.

### SUMMARY

This application provides a wireless power receiving circuit, a wireless charging device, and a system, to implement continuous voltage regulation.

According to a first aspect, this application provides a wireless power receiving circuit, including a receiver coil, a matching circuit, a rectifier circuit, a controller, and an output end, where the rectifier circuit includes at least one switching unit. The receiver coil is configured to: receive energy, and output an alternating current. The matching circuit is configured to: perform matching on the alternating current, and transmit the alternating current to an input end of the rectifier circuit. The rectifier circuit is configured to convert the input alternating current into a direct current. The controller is configured to: determine a duty cycle of the at least one switching unit based on an output voltage of the voltage output end, and control turn-on or turn-off of the at least one switching unit based on the duty cycle, to perform voltage regulation on the output voltage, where the duty cycle is irrelevant to a main frequency of the wireless power receiving circuit.

Because the duty cycle is irrelevant to the main frequency of the wireless power receiving circuit, the duty cycle may not be an integer multiple of the main frequency. Therefore, when the output voltage continuously changes, the duty cycle continuously changes simultaneously.

The voltage regulation may be boost regulation.

In an existing implementation, a main frequency needs to be detected to perform voltage regulation, and a determined duty cycle of a switching transistor is an integer multiple of the main frequency. Consequently, continuous voltage regulation cannot be implemented. In this application, a voltage regulation operation can be performed without using an additional voltage regulator in terms of a hardware structure, and the duty cycle is irrelevant to the main frequency of the wireless power receiving circuit, so that continuous voltage regulation can be implemented without a need to detect the main frequency.

In a possible implementation, the duty cycle is not an integer multiple of the main frequency.

In a possible implementation, when the output voltage continuously changes, the duty cycle continuously changes simultaneously.

In a possible implementation, the rectifier circuit further includes a rectifier bridge, the rectifier bridge includes a plurality of diodes, and each switching unit is connected in parallel to one of the diodes.

In a possible implementation, the at least one switching unit includes only a first switching unit.

In a possible implementation, the at least one switching unit includes a first switching unit and a second switching unit, and the plurality of diodes include a high-side diode and a low-side diode. The first switching unit and the second switching unit are both connected in parallel to the low-side diode; or the first switching unit and the second switching unit are both connected in parallel to the high-side diode; or the first switching unit is connected in parallel to the low-side diode, the second switching unit is connected in parallel to the high-side diode, and the first switching unit and the second switching unit are not directly connected.

It should be understood that the diode and the switching unit may be a two-in-one component, or may be a combination of a diode and a switching transistor.

In a possible implementation, controlling turn-on or turn-off of the at least one switching unit includes: controlling the first switching unit and the second switching unit to be simultaneously turned on or turned off.

In a possible implementation, the rectifier circuit further includes a rectifier bridge, and the rectifier bridge includes a plurality of controllable switching transistors including the at least one switching unit.

In a possible implementation, the at least one switching unit includes only a first switching unit.

In a possible implementation, the at least one switching unit includes a first switching unit and a second switching unit.

The first switching unit and the second switching unit are both low-side controllable switching transistors; or
the first switching unit and the second switching unit are both high-side controllable switching transistors; or
the first switching unit is a low-side controllable switching transistor, the second switching unit is a high-side controllable switching transistor, and the first switching unit and the second switching unit are not directly connected.

In a possible implementation, controlling turn-on or turn-off of the at least one switching unit includes: controlling the first switching unit and the second switching unit to be simultaneously turned on or turned off.

According to a second aspect, this application provides a wireless power receiving circuit, including: a receiver coil, a detuned circuit, a rectifier circuit, a controller, and an output end, where the detuned circuit includes a matching circuit and a grounded target branch, the matching circuit is connected to the target branch, and the target branch includes a detuned capacitor and a switching unit. The receiver coil is configured to: receive energy, and output an alternating current. The rectifier circuit is configured to convert the input alternating current into a direct current. The controller is configured to: determine a duty cycle of the switching unit based on an output voltage of the voltage output end, and control turn-on or turn-off of the switching unit based on the duty cycle, to perform voltage regulation on the output voltage, where the duty cycle is irrelevant to a main frequency of the wireless power receiving circuit.

It is equivalent to that the detuned capacitor and a switching transistor are directly connected in series between the matching circuit 505 and the ground, and the controller 503 generates a modulation signal S2 that is independent of the main frequency of wireless charging to control turn-on and turn-off of a switch, to implement buck control.

The voltage regulation may be buck regulation.

In a possible implementation, the duty cycle is not an integer multiple of the main frequency.

In a possible implementation, when the output voltage continuously changes, the duty cycle continuously changes simultaneously.

In a possible implementation, a matching capacitor includes a first capacitor and a second capacitor, the first capacitor and the second capacitor are located at a first end of the receiver coil, the target branch includes a first branch and a second branch, the first branch includes a first detuned capacitor and a first switching unit, the second branch includes a second detuned capacitor and a second switching unit, the first branch is connected between a ground and a node between the first capacitor and the second capacitor, and the second branch is connected between the ground and a node at a second end of the receiver coil.

It should be understood that the matching capacitor includes at least the first capacitor, and may be a plurality of capacitors (for example, the first capacitor and the second capacitor).

The target branch may include at least the first branch, may be a plurality of branches (for example, the first branch and the second branch), and is usually one or two branches.

In a possible implementation, controlling turn-on or turn-off of the switching unit includes: controlling the first switching unit and the second switching unit to be simultaneously turned on or turned off.

According to a third aspect, this application provides a wireless charging device, including the wireless power receiving circuit according to any one of the first aspect or the second aspect and an energy storage device. The wireless power receiving circuit is configured to serve as a receive end of wireless charging. The wireless power receiving circuit is configured to: receive electric energy, and transmit the electric energy to the energy storage device.

According to a fourth aspect, this application provides a charging system, including the wireless charging device according to the fourth aspect and a wireless power supply device.

According to a fifth aspect, this application provides a wireless charging control method, applied to a receive end of wireless charging. The receive end includes a receiver coil, a matching circuit, a rectifier circuit, a controller, and an output end, and the rectifier circuit includes at least one switching unit.

The method includes:
determining a duty cycle of the at least one switching unit based on an output voltage of the voltage output end, and controlling turn-on or turn-off of the at least one switching unit based on the duty cycle, to perform voltage regulation on the output voltage, where the duty cycle is irrelevant to a main frequency of a wireless power receiving circuit.

In a possible implementation, the duty cycle is not an integer multiple of the main frequency.

In a possible implementation, when the output voltage continuously changes, the duty cycle continuously changes simultaneously.

According to a sixth aspect, this application provides a wireless charging control method, applied to a receive end of wireless charging. The receive end includes: a receiver coil, a detuned circuit, a rectifier circuit, a controller, and an output end, the detuned circuit includes a matching circuit and a grounded target branch, the matching circuit is connected to the target branch, and the target branch includes a detuned capacitor and a switching unit.

The method includes:
determining a duty cycle of the switching unit based on an output voltage of the voltage output end, and controlling turn-on or turn-off of the switching unit based on the duty cycle, to perform voltage regulation on the output voltage, where the duty cycle is irrelevant to a main frequency of a wireless power receiving circuit.

In a possible implementation, the duty cycle is not an integer multiple of the main frequency.

In a possible implementation, when the output voltage continuously changes, the duty cycle continuously changes simultaneously.

### BRIEF DESCRIPTION OF DRAWINGS

FIG. 1 is a diagram of a wireless charging system to which this application is applicable;
FIG. 2 is a diagram of several wireless reverse charging scenarios according to an embodiment of this application;
FIG. 3 is a diagram of another wireless charging system according to an embodiment of this application;
FIG. 4 is a diagram of a wireless charging principle;
FIG. 5 is a diagram of a structure of a circuit;
FIG. 6 is a diagram of a structure of a circuit;
FIG. 7 is a diagram of a structure of a circuit; and
FIG. 8 is a diagram of a duty cycle.

### DESCRIPTION OF EMBODIMENTS

The following describes technical solutions in embodiments of this application with reference to accompanying drawings.

It should be noted that, in descriptions of embodiments of this application, unless otherwise specified, "/" represents an "or" relationship. For example, A/B may represent A or B. "And/or" in this specification is merely an association relationship for describing associated objects, and represents that three relationships may exist. For example, A and/or B may represent the following three cases: Only A exists, both A and B exist, and only B exists.

In embodiments of this application, terms "first" and "second" are merely used for the purpose of description, and shall not be understood as indicating or implying relative importance or implicitly indicating a quantity of indicated technical features. Therefore, a feature limited by "first" or "second" may explicitly or implicitly include one or more such features. In addition, in the descriptions of embodiments of this application, "a plurality of" means two or more, and "at least one" and "one or more" mean one, two, or more. Singular expression forms "one", "a", "the", "the foregoing", "this", and "the one" are also intended to include expression forms such as "one or more", unless otherwise specified in the context clearly.

Reference to "an embodiment", "some embodiments", or the like described in this specification means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and other variants thereof all mean "include but are not limited to", unless otherwise specifically emphasized in another manner.

In the descriptions of embodiments of this application, orientations or location relationships indicated by terms such as "up", "down", "left", "right", "inner", "outer", "vertical", and "horizontal" are defined relative to orientations or locations of components schematically placed in the accompanying drawings. It should be understood that these orientation terms are relative concepts, and are used for relative description and clarification, instead of indicating or implying that specified apparatuses or components need to have specific orientations or are constructed and operated in specific orientations. The terms may vary correspondingly based on changes of the orientations of the components placed in the accompanying drawings, and therefore shall not be understood as a limitation on this application. In addition, "vertical" in this application is not strictly vertical, but is vertical within an allowed error range. "Parallel" is not strictly parallel, but is parallel within an allowed error range.

In embodiments of this application, same reference numerals indicate same components or parts. For same components or parts in embodiments of this application, only one component or part may be marked with a reference numeral in the figure as an example. It should be understood that, this is also applicable to reference numerals of other same components or parts. In addition, components or parts in the accompanying drawings are not drawn to actual scale. Dimensions and sizes of the components or parts shown in the figures are merely examples, and should not be understood as a limitation on this application.

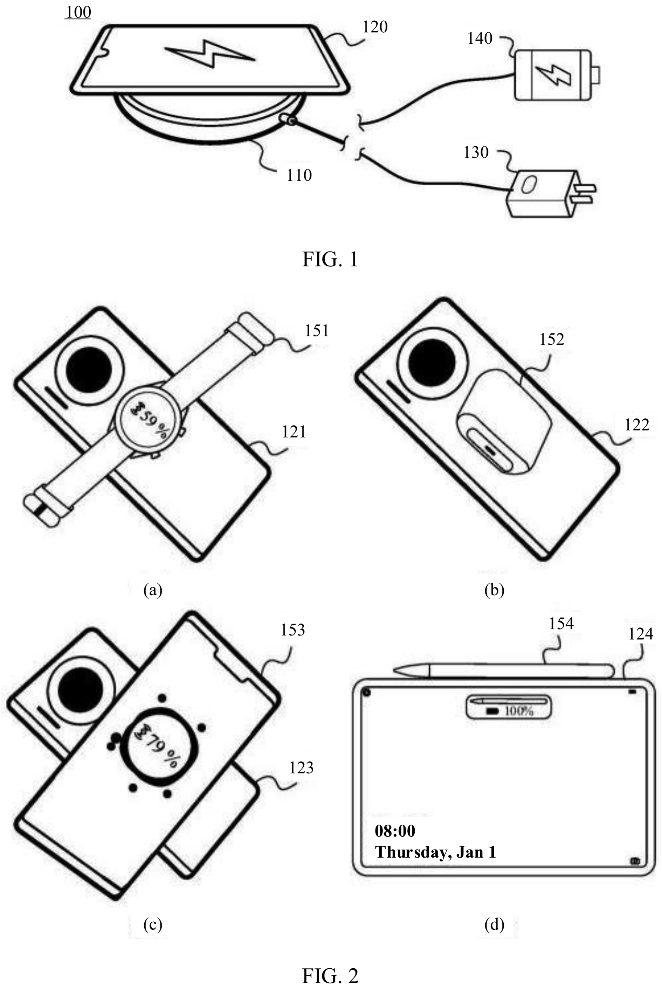

FIG. 1 is a diagram of a wireless charging system to which this application is applicable.

As shown in FIG. 1, the wireless charging system 100 may include a wireless charging transmitting device 110 and a wireless charging receiving device 120. Energy may be transferred between the wireless charging transmitting device 110 and the wireless charging receiving device 120 in an energy coupling manner. More specifically, the wireless charging transmitting device 110 is used as an energy source, and may charge the wireless charging receiving device 120 by using an electromagnetic induction principle.

In some embodiments, the wireless charging transmitting device 110 used as a power supply device may also be referred to as a transmit end, and the wireless charging receiving device 120 used as a power receiving device may also be referred to as a receive end.

In embodiments of this application, the wireless charging transmitting device 110 or the wireless charging receiving device 120 may be a device having a wireless charging function, for example, a smartphone, a smartwatch, a smart band, a stylus, an earbud, a charging case, a tablet computer, an e-reader, a notebook computer, a camera, a vehicle-mounted device, a wireless charger, a mobile charger (which may also be referred to as a mobile power supply or a power bank), a wearable device (for example, smart glasses or smart jewelry), a virtual reality (virtual reality, VR) terminal device, an augmented reality (augmented reality, AR) terminal device, a smart home device (for example, a smart screen or a smart television), or a vehicle.

By way of example, and not limitation, the wireless charging transmitting device 110 is a charging cradle, and the wireless charging receiving device 120 is a mobile phone; or the wireless charging transmitting device 110 is a charging case, and the wireless charging receiving device 120 is a wireless earbud; or the wireless charging transmitting device 110 is a smartphone, and the wireless charging receiving device 120 is a smartwatch; or the wireless charging transmitting device 110 is a vehicle, and the wireless charging receiving device 120 is a portable electronic device, for example, a mobile phone or a tablet computer.

In some embodiments, the wireless charging system 100 may further include a charger 130, and the charger 130 is connected to the wireless charging transmitting device 110. The charger 130 may be configured to: receive mains electricity, convert the mains electricity into a direct current, and output the direct current to the wireless charging transmitting device 110. Alternatively, the charger 130 may be configured to directly output received alternating current mains electricity to the wireless charging transmitting device 110. The wireless charging transmitting device 110 is configured to: convert received electric energy into electromagnetic field energy, and transmit the electromagnetic field energy to the outside. The wireless charging receiving device 120 is configured to: receive electromagnetic field energy, and convert the electromagnetic field energy into electric energy, to implement wireless charging.

In some embodiments, the wireless charging system 100 may further include an energy apparatus 140, for example, a battery. The wireless charging transmitting device 110 may be directly connected to the energy apparatus 140, to receive, as an input, a direct current or an alternating current provided by the energy apparatus 140.

In some embodiments, the wireless charging receiving device 120 may also be used as an energy source to charge another device that supports wireless charging. For example, a mobile phone having the wireless charging function may charge a device that supports wireless charging, for example, an earbud, a watch, or another mobile phone. In other words, the wireless charging receiving device 120 may receive electric energy provided by the wireless charging transmitting device 110, and may also be used as a wireless charging transmitting device to charge another wireless charging receiving device, that is, support a wireless reverse charging function. Different from a power supply manner of a wireless charging cradle, energy of wireless reverse charging mainly depends on a device battery, and charging power is low.

It should be noted that "a device has the wireless charging function" or a similar description thereof in this application may be understood as that the device has a capability of transmitting power to another device in a wireless manner, and/or the device has a capability of receiving, in the wireless manner, power transmitted by another device. That is, the device may be a transmit end, and/or may be a receive end.

It should be noted that "a device has the wireless reverse charging function" or a similar description thereof in this application may be understood as that the device has a capability of receiving, in the wireless manner, power transmitted by another device and a capability of transmitting power to another device in the wireless manner.

FIG. 2 is a diagram of several wireless reverse charging scenarios according to an embodiment of this application. It may be understood that a specific form of the wireless reverse charging scenario is not limited in embodiments of this application. The wireless reverse charging scenarios described in FIG. 2 are merely several examples provided for ease of understanding.

As shown in (a) in FIG. 2, a wireless reverse charging scenario may include a mobile phone 121 and a watch 151. The mobile phone 121 may be used as a receive end to receive electric energy in a wireless charging process. In addition, the mobile phone 121 may be used as a transmit end to perform wireless reverse charging on the watch 151 after a wireless reverse charging function is enabled. In this case, the watch 151 is a receive end in a wireless reverse charging process.

As shown in (b) in FIG. 2, a wireless reverse charging scenario may include a mobile phone 122 and an earbud charging case 152. The mobile phone 122 may be used as a receive end to receive electric energy in a wireless charging process. In addition, the mobile phone 122 may be used as a transmit end to perform wireless reverse charging on the earbud charging case 152 after a wireless reverse charging function is enabled. In this case, the earbud charging case 152 is a receive end in a wireless reverse charging process.

As shown in (c) in FIG. 2, a wireless reverse charging scenario may include a first mobile phone 123 and a second mobile phone 153. The first mobile phone 123 may be used as a receive end to receive electric energy in a wireless charging process. In addition, the first mobile phone 123 may be used as a transmit end to perform wireless reverse charging on the second mobile phone 153 after a wireless reverse charging function is enabled. In this case, the second mobile phone 153 is a receive end in a wireless reverse charging process.

As shown in (d) in FIG. 2, a wireless reverse charging scenario may include a tablet computer 124 and a stylus 154. The tablet computer 124 may be used as a receive end to receive electric energy in a wireless charging process. In addition, the tablet computer 124 may be used as a transmit end to perform wireless reverse charging on the stylus 154 after a wireless reverse charging function is enabled. In this case, the stylus 154 is a receive end in a wireless reverse charging process.

In (a) to (d) in FIG. 2, the watch 151, the earbud charging case 152, the second mobile phone 153, and the stylus 154 may not have the wireless reverse charging function, or temporarily do not enable the wireless reverse charging function.

It should be understood that a specific type of a device in a wireless reverse charging scenario is not limited in embodiments of this application. For example, a power supply device (that is, an electronic device that enables the wireless reverse charging function and wirelessly charges another device) may be a portable electronic device, for example, a mobile phone, a tablet computer, or a notebook computer. A power receiving device (that is, an electronic device that is wirelessly charged by a power supply device) may be a portable electronic device, for example, a mobile phone, a band, a watch, an earbud, a keyboard, a stylus, or an electric toothbrush.

In addition, it may be understood that the wireless reverse charging scenario is one of wireless charging scenarios. Correspondingly, (a) to (d) in FIG. 2 are actually specific examples of the wireless charging system 100. The mobile phone 121, the mobile phone 122, the first mobile phone 123, and the tablet computer 124 are specific examples of the wireless charging transmitting device 110 shown in FIG. 1. The watch 151, the earbud charging case 152, the second mobile phone 153, and the stylus 154 are specific examples of the wireless charging receiving device 120 shown in FIG. 1.

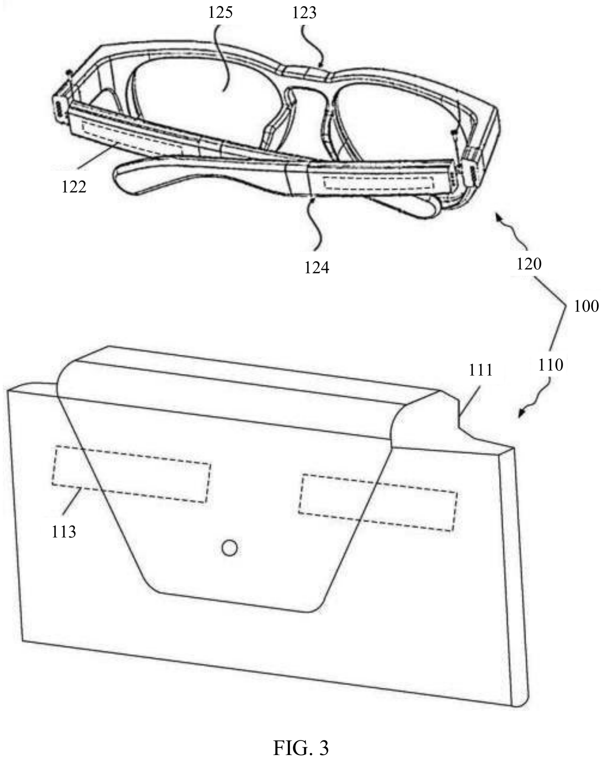

FIG. 3 shows another wireless charging system 100 according to an embodiment of this application. In the embodiment shown in FIG. 3, an example in which a wireless charging transmitting device 110 is a glasses case and a wireless charging receiving device 120 is smart glasses is used for description.

The wireless charging transmitting device 110 may include a housing 111 and a wireless power receiving circuit 113. The wireless power receiving circuit 113 may be fastened to the housing 111, for example, fastened to an inner wall of the housing 111. The housing 111 may be further configured to accommodate glasses, for example, the wireless charging receiving device 120 shown in FIG. 3.

The wireless charging receiving device 120 may include a frame 123, a temple 124, and a lens 125. There may be one or more temples 124. In the embodiment shown in FIG. 3, there may be a plurality of temples 124. The lens 125 is fastened to the frame 123.

One end of the temple 124 may be rotatably connected to one end of the frame 123 through a connecting shaft, so that the temple 124 can switch between an expanded state and a folded state. In some embodiments, one end of the temple 124 may be detachably connected to one end of the frame 123 through a connecting shaft. When the temple 124 is in the expanded state, the temple 124 can be worn on an ear of a user. FIG. 3 is a diagram in which the temple 124 is in the folded state. When the temple 124 is in the folded state, the temple 124 is folded relative to the frame 123. In some embodiments, the temple 124 being in the folded state facilitates accommodation of the smart glasses 100 in the glasses case (for example, the wireless charging transmitting device 110 shown in FIG. 3, or a common glasses case).

An electronic device (not shown in the figure), for example, a mainboard, a wireless power receiving circuit 122, or a battery, may be disposed on the temple 124. A voice control module, a gesture recognition module, an eye tracking module, or the like may be disposed on the mainboard. As a power supply, the battery may supply electric energy to the temple 124. The wireless power receiving circuit 122 may include a receiver coil, and the wireless power receiving circuit 122 may charge the battery through the receiver coil. In some embodiments, the battery may be located at an end that is of the temple and that is away from the frame, and the wireless power receiving circuit 122 and the mainboard may be located at an end that is of the temple and that is close to the frame.

In some possible scenarios, the smart glasses may be augmented reality (augmented reality, AR) smart glasses. When the smart glasses are worn on a head of the user, the user may see an image displayed by a display unit (not shown in the figure) of the smart glasses. In other words, the user may not only watch a scenario of a real world through the smart glasses, but also observe an image of a virtual world through the smart glasses. In some embodiments, the user may further use the smart glasses, so that the smart glasses display a virtual image to enhance observation effect of the real world. In some other possible scenarios, the smart glasses may not be limited to AR smart glasses, and the smart glasses may be other smart glasses, for example, VR smart glasses that implement virtual reality (virtual reality, VR) effect, smart glasses that implement mixed reality (mixed reality, MR) effect, or smart glasses that have an audio function.

With reference to the wireless charging systems 100 shown in FIG. 1, FIG. 2, and FIG. 3, the following describes a principle of wireless charging from the wireless charging transmitting device 110 to the wireless charging receiving device 120.

In a process in which the wireless charging transmitting device 110 wirelessly charges the wireless charging receiving device 120, the wireless charging transmitting device 110 may be close to the wireless charging receiving device 120, so that a transmitter coil of the wireless charging transmitting device 110 may be coupled to a receiver coil of the wireless charging receiving device 120.

In the embodiment shown in FIG. 1, a magnetic component may be disposed near a frame of the wireless charging transmitting device 110. The magnetic component may be configured to attach the wireless charging receiving device 120 to the frame of the wireless charging transmitting device 110, so that the transmitter coil of the wireless charging transmitting device 110 can be stably coupled to the receiver coil of the wireless charging receiving device 120.

In the embodiment shown in FIG. 3, the wireless charging receiving device 120 may be folded and accommodated in an accommodating cavity of the wireless charging transmitting device 110. The wireless power receiving circuit 122 of the wireless charging receiving device 120 may be disposed close to the wireless power receiving circuit 113 of the wireless charging transmitting device 110, so that the transmitter coil of the wireless charging transmitting device 110 may be stably coupled to the receiver coil of the wireless charging receiving device 120.

The wireless power receiving circuit 113 may transmit a changing magnetic field through the transmitter coil. A coil of the wireless power receiving circuit 122 may induce the magnetic field from the wireless power receiving circuit 113, and generate an induced current. The wireless power receiving circuit 122 may transfer the induced current generated by the coil to another component in the wireless charging receiving device 120, for example, a battery. In this scenario, a coil of the wireless charging transmitting device 110 may be a transmitter coil, and a coil of the wireless charging receiving device 120 may be a receiver coil.

In some embodiments, the wireless charging transmitting device 110 may alternatively be a wireless charging receiving device, in other words, another device may wirelessly charge the wireless power receiving circuit 113. A coil of the wireless power receiving circuit 113 may induce a magnetic field from the another device, and generate an induced current. The wireless power receiving circuit 113 may transfer the induced current generated by the coil to another component in the wireless power receiving circuit 113. In this scenario, the coil of the wireless charging transmitting device 110 may be a receiver coil. In other words, the coil of the wireless charging transmitting device 110 may serve as both a transmitter coil and a receiver coil. For example, in the embodiment shown in FIG. 3, the glasses case may obtain electric energy from a wireless charger through the wireless power receiving circuit 113.

In some other embodiments, the wireless charging receiving device 120 may alternatively be a wireless charging transmitting device, in other words, the wireless power receiving circuit 122 may wirelessly charge another device. The coil of the wireless power receiving circuit 122 may transmit a changing magnetic field, so that the wireless charging receiving device 120 may wirelessly charge the another device. In this scenario, the coil of the wireless charging receiving device 120 may be a transmitter coil. In other words, the coil of the wireless charging receiving device 120 may serve as both a receiver coil and a transmitter coil. For example, in the embodiment shown in FIG. 1, the stylus may wirelessly charge another device through the wireless power receiving circuit 122. For another example, in the embodiment shown in FIG. 2, the smart glasses may wirelessly charge another device through the wireless power receiving circuit 12.

In some embodiments provided in this application, the coil may be a toroidal winding made by tightly winding a conducting wire. The conducting wire may be wrapped with an insulating material.

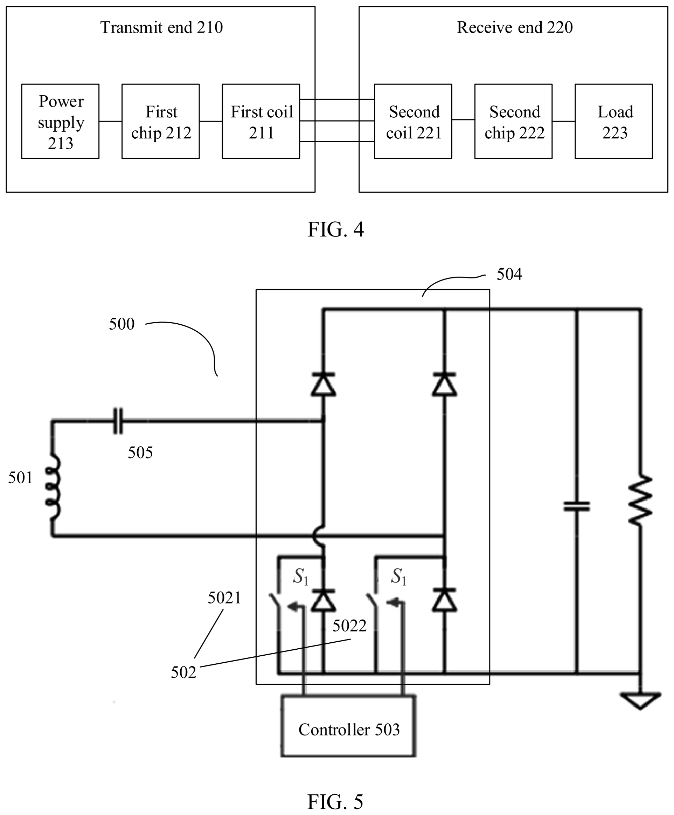

FIG. 4 is a diagram of a wireless charging principle. As shown in FIG. 4, a wireless charging scenario involves a transmit end 210 (namely, a power supply device) and a receive end 220 (namely, a power receiving device). Both the transmit end 210 and the receive end 220 have a wireless charging capability, to implement a wireless charging process from the transmit end 210 to the receive end 220.

The transmit end 210 may include a first coil 211, a first chip 212, and a power supply 213, and the receive end 220 may include a second coil 221, a second chip 222, and a load 223. The first coil 211 and the second coil 221 are configured to implement energy coupling. The first chip 212 and the second chip 222 are configured to implement wireless charging control or management. The power supply 213 and the load 223 are configured to store electric energy.

After a wireless charging area of the transmit end 210 is aligned with a wireless charging area of the receive end 220, the transmit end 210 may wirelessly charge the receive end 220. Specifically, in the wireless charging process, the transmit end 210 may control, through the first chip 212, the power supply 213 to output a current to the first coil 211 (namely, a power output coil), so that the first coil 211 may transmit a high-frequency magnetic field, in other words, convert an electrical signal into a magnetic signal. The high-frequency magnetic field may pass through the second coil 221 (namely, a power receiving coil), so that an induced current is generated on the second coil 221, in other words, the magnetic signal is converted into an electrical signal. The second chip 222 may detect the induced current, and input the induced current into the load 223.

In some embodiments, the first chip 212 may include a voltage conversion module and a transmitting circuit. The voltage conversion module is configured to implement voltage conversion, and the transmitting circuit is configured to convert a direct current into an alternating current electrical signal. Correspondingly, the first coil 211 is configured to: convert the alternating current electrical signal into a magnetic signal, and transmit the magnetic signal.

In some embodiments, the second chip 222 may include a voltage conversion module and a receiving circuit. The second coil 221 is configured to convert the magnetic signal into an alternating current electrical signal, the receiving circuit is configured to convert the alternating current electrical signal into a direct current, and the voltage conversion module is configured to implement voltage conversion.

Power limits of mobile or portable wireless charging devices such as mobile phones gradually increase. Therefore, wireless charging power needs to be increased to shorten charging time, so as to improve charging experience of users. However, because a heat dissipation capability of a terminal device is limited, efficiency of a receive end of wireless charging needs to be further improved to support higher wireless charging power.

In a conventional technology, an output voltage is regulated through pulse modulation. However, a modulation frequency of the pulse modulation is generated based on a main frequency of wireless charging, and the main frequency needs to be detected. Consequently, continuous voltage regulation is not supported.

To resolve the foregoing problem, with reference to FIG. 5, an embodiment of this application provides a wireless power receiving circuit 500, including a receiver coil 501, a matching circuit 505, a rectifier circuit 504, a controller 503, and an output end. The rectifier circuit 504 includes at least one switching unit 502.

In the wireless power receiving circuit 500, the receiver coil 501 may be connected to the matching circuit 505, to form an oscillator circuit on a side of the wireless power receiving circuit 500. The receiver coil 501 receives, through coil coupling, power transmitted by a transmitter coil, and the power is converted into an alternating current through the oscillator circuit. The rectifier circuit 504 is connected to the oscillator circuit, and is configured to: receive the alternating current output by the oscillator circuit, and rectify the alternating current to obtain a direct current.

The rectifier circuit 504 may include an uncontrolled rectifier circuit 504 or a synchronous rectifier circuit 504. The uncontrolled rectifier circuit 504 includes at least one diode, and the synchronous rectifier circuit 504 includes at least one metal-oxide-semiconductor field-effect transistor (metal-oxide-semiconductor field-effect transistor, MOSFET). This is not limited in this embodiment of this application.

In a possible implementation, the rectifier circuit 504 includes the at least one switching unit 502. The switching unit may be a controllable switching unit in a rectifier bridge of the rectifier circuit 504, or a switching unit connected in parallel to a diode in the rectifier bridge.
1. The switching unit may be the switching unit connected in parallel to the diode in the rectifier bridge.

In a possible implementation, the rectifier circuit 504 includes the rectifier bridge. The rectifier bridge includes a plurality of diodes, and each switching unit is connected in parallel to one of the diodes. For example, the at least one switching unit 502 includes a first switching unit 5021 and a second switching unit 5022, the plurality of diodes include a high-side diode and a low-side diode, and the first switching unit 5021 and the second switching unit 5022 are both connected in parallel to the low-side diode. For another example, the at least one switching unit 502 includes a first switching unit 5021 and a second switching unit 5022, the plurality of diodes include a high-side diode and a low-side diode, and the first switching unit 5021 and the second switching unit 5022 are both connected in parallel to the high-side diode. For another example, the at least one switching unit 502 includes a first switching unit 5021 and a second switching unit 5022, the plurality of diodes include a high-side diode and a low-side diode, the first switching unit 5021 is connected in parallel to the low-side diode, the second switching unit 5022 is connected in parallel to the high-side diode, and the first switching unit 5021 and the second switching unit 5022 are not directly connected. For example, the first switching unit 5021 is connected in parallel to a high-side diode in a left leg, and the first switching unit 5021 is connected in parallel to a low-side diode in a right leg. Alternatively, the first switching unit 5021 is connected in parallel to a high-side diode in a right leg, and the first switching unit 5021 is connected in parallel to a low-side diode in a left leg.

In a possible implementation, the at least one switching unit 502 includes only a first switching unit 5021. For example, the first switching unit 5021 is connected in parallel to a high-side diode in a left leg, or the first switching unit 5021 is connected in parallel to a high-side diode in a right leg, or the first switching unit 5021 is connected in parallel to a low-side diode in a left leg, or the first switching unit 5021 is connected in parallel to a low-side diode in the right leg.

2. The switching unit may be the controllable switching unit in the rectifier bridge of the rectifier circuit 504.

In a possible implementation, the rectifier circuit 504 further includes the rectifier bridge, and the rectifier bridge includes a plurality of controllable switching transistors including the at least one switching unit 502. For example, the at least one switching unit 502 includes a first switching unit 5021 and a second switching unit 5022, and the first switching unit 5021 and the second switching unit 5022 are both high-side controllable switching transistors. For another example, the at least one switching unit 502 includes a first switching unit 5021 and a second switching unit 5022, and the first switching unit 5021 and the second switching unit 5022 are both low-side controllable switching transistors. For another example, the at least one switching unit 502 includes a first switching unit 5021 and a second switching unit 5022, the first switching unit 5021 is a low-side controllable switching transistor in a left leg, and the second switching unit 5022 is a high-side controllable switching transistor in a right leg. Alternatively, the first switching unit 5021 is a high-side controllable switching transistor in a left leg, and the first switching unit 5021 is a low-side controllable switching transistor in a right leg.

In a possible implementation, the at least one switching unit 502 includes only a first switching unit 5021. For example, the first switching unit 5021 is a high-side controllable switching transistor in a left leg, or the first switching unit 5021 is a high-side controllable switching transistor in a right leg, or the first switching unit 5021 is a low-side controllable switching transistor in a left leg, or the first switching unit 5021 is a low-side controllable switching transistor in a right leg.

In a possible implementation, the controller 503 is configured to: determine a duty cycle of the at least one switching unit 502 based on an output voltage of the voltage output end, and control turn-on or turn-off of the at least one switching unit 502 based on the duty cycle (for example, a modulation signal obtained based on the duty cycle), to perform voltage regulation on the output voltage, where the duty cycle is irrelevant to a main frequency of the wireless power receiving circuit 500.

Because the duty cycle is irrelevant to the main frequency of the wireless power receiving circuit 500, the duty cycle may not be an integer multiple of the main frequency. Therefore, when the output voltage continuously changes, the duty cycle continuously changes simultaneously.

In an existing implementation, a main frequency needs to be detected to perform voltage regulation, and a determined duty cycle of a switching transistor is an integer multiple of the main frequency. Consequently, continuous voltage regulation cannot be implemented. In this application, a voltage regulation operation can be performed without using an additional voltage regulator in terms of a hardware structure, and the duty cycle is irrelevant to the main frequency of the wireless power receiving circuit 500, so that continuous voltage regulation can be implemented without a need to detect the main frequency.

When the at least one switching unit 502 includes a plurality of switching units (for example, the first switching unit 5021 and the second switching unit 5022 described in the foregoing embodiment), controlling turn-on or turn-off of the at least one switching unit 502 includes: controlling the first switching unit 5021 and the second switching unit 5022 to be simultaneously turned on or turned off.

It should be understood that, when the at least one switching unit 502 includes one switching unit (for example, only the first switching unit 5021 described in the foregoing embodiment), a boost regulation range can reach up to two times. When the at least one switching unit 502 includes a plurality of switching units (for example, the first switching unit 5021 and the second switching unit 5022 described in the foregoing embodiment), a boost regulation range can reach up to unlimited.

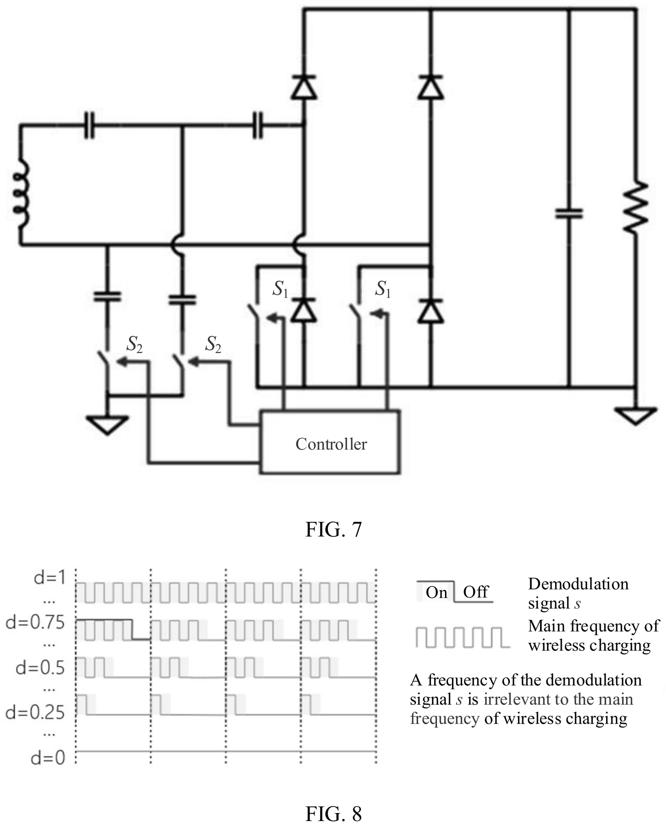

For example, FIG. 8 is an example of a duty cycle in a modulation signal.

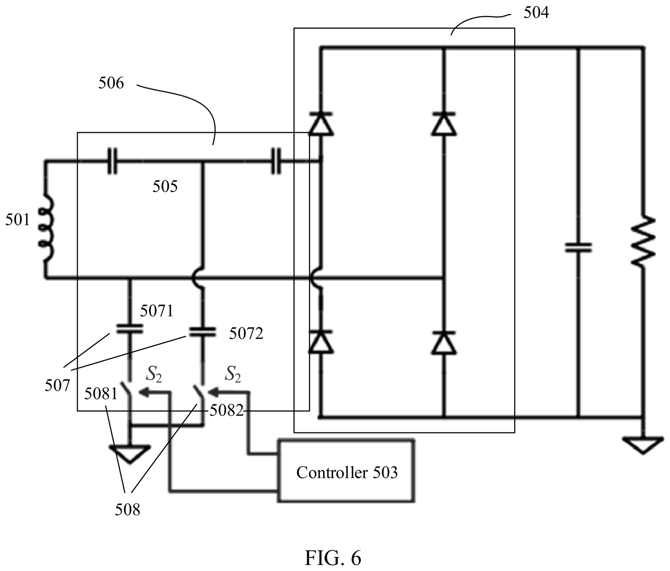

With reference to FIG. 6, an embodiment of this application further provides a wireless power receiving circuit 500, including a receiver coil 501, a detuned circuit 506, a rectifier circuit 504, a controller 503, and an output end. The detuned circuit 506 includes a matching circuit 505 and a grounded target branch, the matching circuit 505 is connected to the target branch, and the target branch includes a detuned capacitor and a switching unit 508.

In a possible implementation, a matching capacitor includes a first capacitor and a second capacitor, the first capacitor and the second capacitor are located at a first end of the receiver coil 501, the target branch includes a first branch and a second branch, the first branch includes a first detuned capacitor 5071 and a first switching unit 5081, the second branch includes a second detuned capacitor 5072 and a second switching unit 5082, the first branch is connected between a ground and a node between the first capacitor and the second capacitor, and the second branch is connected between the ground and a node at a second end of the receiver coil 501.

The controller 503 is configured to: determine a duty cycle of the switching unit based on an output voltage of the voltage output end, and control turn-on or turn-off of the switching unit based on the duty cycle, to perform voltage regulation on the output voltage, where the duty cycle is irrelevant to a main frequency of the wireless power receiving circuit 500.

It is equivalent to that the detuned capacitor and a switching transistor are directly connected in series between the matching circuit 505 and the ground, and the controller 503 generates a modulation signal S2 that is independent of the main frequency of wireless charging to control turn-on and turn-off of a switch, to implement buck control.

Because the duty cycle is irrelevant to the main frequency of the wireless power receiving circuit 500, the duty cycle may not be an integer multiple of the main frequency. Therefore, when the output voltage continuously changes, the duty cycle continuously changes simultaneously.

The foregoing embodiments of FIG. 5 and FIG. 6 may be combined with each other to implement results of buck and boost functions. With reference to FIG. 7, specifically, two groups of switches may be added to the original rectifier circuit 504 and the matching circuit 505, and modulation signals S1 and S2 that are independent of a main operating frequency of wireless charging are used to implement voltage regulation. A first group of switches each are connected in parallel to two ends of a rectifier diode, and boost control is implemented by controlling a duty cycle d1 of the independent signal S1. The independent signal S1 may alternatively be used on a synchronous rectifier switching transistor to implement boost control. A second group of switches each are connected in series to a detuned capacitor and grounded, and buck control is implemented by controlling a duty cycle d2 of the independent signal S2. A switching component is connected in parallel to the rectifier diode, and the controller 503 generates the modulation signal S1 that is independent of the main frequency of wireless charging to control turn-on and turn-off of the switch, to implement boost control. The modulation signal may alternatively be directly used on the synchronous rectifier switching transistor. The detuned capacitor and the switching transistor are directly connected in series between the matching circuit 505 and the ground, and the controller 503 generates the modulation signal S2 that is independent of the main frequency of wireless charging to control turn-on and turn-off of the switch, to implement buck control.

The wireless power receiving circuit provided in embodiments of this application may be applied to a charging device, a vehicle, or a portable electronic device, and is used as a receive end or a transmit end of electric energy.

The vehicle is used as an example. With popularization of vehicles, cars and the like have become an indispensable transportation means in daily life of people. However, development cycles of the vehicles are long, and update and iteration are slow, which cannot meet diversified and personalized requirements of consumers. Consumer electronic products such as mobile phones and watches are convenient for the consumers to carry. The products can adapt to fast-changing scenario requirements due to advantages of the products, that is, short life cycles and fast update and iteration. Therefore, it is imperative to ecologically integrate the consumer electronics industry and the automobile industry. In embodiments of this application, the wireless power receiving circuit may be applied to a vehicle, to facilitate practice of putting consumer electronic products into the vehicle.

In some embodiments, the wireless power receiving circuit provided in embodiments of this application may be disposed at at least one of a control console, a seat back, a door armrest, a central armrest, a door trim, and a trunk of the vehicle, so that a user can conveniently charge an in-vehicle ecological device through the wireless power receiving circuit. In embodiments of this application, when the wireless power receiving circuit is disposed in the vehicle, the wireless power receiving circuit may be electrically connected to a power supply circuit in the vehicle, and an energy source of the wireless power receiving circuit is the vehicle. In other words, the wireless power receiving circuit obtains energy from the power supply circuit of the vehicle, and can wirelessly charge another device.

In some embodiments, the wireless power receiving circuit provided in embodiments of this application may be fastened to the vehicle as a pre-installed component. In other words, before the vehicle is delivered from a factory, the wireless power receiving circuit is built in the vehicle as the pre-installed component. In this way, the vehicle can charge the in-vehicle ecological device without using an exposed wire or a charging interface, which can improve aesthetics and help meet personalized and diversified scenario requirements of the user.

In some other embodiments, the wireless power receiving circuit provided in embodiments of this application is installed in the vehicle by using a detachable connection structure. For example, the wireless power receiving circuit is installed in the vehicle by using a clamp jaw, a buckle, a thread, an adhesive closure strip, or the like. In this way, it can be convenient for the user to charge the in-vehicle ecological device by using the wireless power receiving circuit at different locations of the vehicle. In some embodiments, the wireless power receiving circuit may be electrically connected to a charging interface on the vehicle through a charging connector, or may be electrically connected to the charging interface through a contact point.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless power receiving circuit, comprising a receiver coil, a matching circuit, a rectifier circuit, a controller, and an output end, wherein the rectifier circuit comprises at least one switching unit;
the receiver coil is configured to: receive energy, and output an alternating current;
the matching circuit is configured to: perform matching on the alternating current, and transmit the alternating current to an input end of the rectifier circuit;
the rectifier circuit is configured to convert the input alternating current into a direct current; and
the controller is configured to: determine a duty cycle of the at least one switching unit based on an output voltage of the voltage output end, and control turn-on or turn-off of the at least one switching unit based on the duty cycle, to perform voltage regulation on the output voltage, wherein the duty cycle is irrelevant to a main frequency of the wireless power receiving circuit.

2. The wireless power receiving circuit according to claim 1, wherein the duty cycle is not an integer multiple of the main frequency.

3. The wireless power receiving circuit according to claim 1 or 2, wherein when the output voltage continuously changes, the duty cycle continuously changes simultaneously.

4. The wireless power receiving circuit according to any one of claims 1 to 3, wherein the rectifier circuit further comprises a rectifier bridge, the rectifier bridge comprises a plurality of diodes, and each switching unit is connected in parallel to one of the diodes.

5. The wireless power receiving circuit according to claim 4, wherein the at least one switching unit comprises only a first switching unit.

6. The wireless power receiving circuit according to claim 4, wherein the at least one switching unit comprises a first switching unit and a second switching unit, and the plurality of diodes comprise a high-side diode and a low-side diode; and
the first switching unit and the second switching unit are both connected in parallel to the low-side diode; or
the first switching unit and the second switching unit are both connected in parallel to the high-side diode; or
the first switching unit is connected in parallel to the low-side diode, the second switching unit is connected in parallel to the high-side diode, and the first switching unit and the second switching unit are not directly connected.

7. The wireless power receiving circuit according to claim 6, wherein controlling turn-on or turn-off of the at least one switching unit comprises: controlling the first switching unit and the second switching unit to be simultaneously turned on or turned off.

8. The wireless power receiving circuit according to any one of claims 1 to 3, wherein the rectifier circuit further comprises a rectifier bridge, and the rectifier bridge comprises a plurality of controllable switching transistors comprising the at least one switching unit.

9. The wireless power receiving circuit according to claim 8, wherein the at least one switching unit comprises only a first switching unit.

10. The wireless power receiving circuit according to claim 8 or 9, wherein the at least one switching unit comprises a first switching unit and a second switching unit; and
the first switching unit and the second switching unit are both low-side controllable switching transistors; or
the first switching unit and the second switching unit are both high-side controllable switching transistors; or
the first switching unit is a low-side controllable switching transistor, the second switching unit is a high-side controllable switching transistor, and the first switching unit and the second switching unit are not directly connected.

11. The wireless power receiving circuit according to claim 10, wherein controlling turn-on or turn-off of the at least one switching unit comprises: controlling the first switching unit and the second switching unit to be simultaneously turned on or turned off.

12. A wireless power receiving circuit, comprising: a receiver coil, a detuned circuit, a rectifier circuit, a controller, and an output end, wherein the detuned circuit comprises a matching circuit and a grounded target branch, the matching circuit is connected to the target branch, and the target branch comprises a detuned capacitor and a switching unit;
the receiver coil is configured to: receive energy, and output an alternating current;
the rectifier circuit is configured to convert the input alternating current into a direct current; and
the controller is configured to: determine a duty cycle of the switching unit based on an output voltage of the voltage output end, and control turn-on or turn-off of the switching unit based on the duty cycle, to perform voltage regulation on the output voltage, wherein the duty cycle is irrelevant to a main frequency of the wireless power receiving circuit.

13. The wireless power receiving circuit according to claim 12, wherein the duty cycle is not an integer multiple of the main frequency.

14. The wireless power receiving circuit according to claim 12 or 13, wherein when the output voltage continuously changes, the duty cycle continuously changes simultaneously.

15. The wireless power receiving circuit according to any one of claims 12 to 14, wherein a matching capacitor comprises a first capacitor and a second capacitor, the first capacitor and the second capacitor are located at a first end of the receiver coil, the target branch comprises a first branch and a second branch, the first branch comprises a first detuned capacitor and a first switching unit, the second branch comprises a second detuned capacitor and a second switching unit, the first branch is connected between a ground and a node between the first capacitor and the second capacitor, and the second branch is connected between the ground and a node at a second end of the receiver coil.

16. The wireless power receiving circuit according to claim 15, wherein controlling turn-on or turn-off of the switching unit comprises: controlling the first switching unit and the second switching unit to be simultaneously turned on or turned off.

17. A wireless charging device, comprising the wireless power receiving circuit according to any one of claims 1 to 16 and an energy storage device, wherein
the wireless power receiving circuit is configured to: receive electric energy, and transmit the electric energy to the energy storage device.

18. A charging system, comprising the wireless charging device according to claim 17 and a wireless power supply device, wherein
a transmitter coil comprised in the wireless power supply device is configured to transmit energy to the wireless charging device.

19. A wireless charging control method, applied to a receive end of wireless charging, wherein the receive end comprises a receiver coil, a matching circuit, a rectifier circuit, a controller, and an output end, and the rectifier circuit comprises at least one switching unit; and
the method comprises:
determining a duty cycle of the at least one switching unit based on an output voltage of the voltage output end, and controlling turn-on or turn-off of the at least one switching unit based on the duty cycle, to perform voltage regulation on the output voltage, wherein the duty cycle is irrelevant to a main frequency of a wireless power receiving circuit.

20. The method according to claim 19, wherein the duty cycle is not an integer multiple of the main frequency.

21. The method according to claim 19 or 20, wherein when the output voltage continuously changes, the duty cycle continuously changes simultaneously.

22. A wireless charging control method, applied to a receive end of wireless charging, wherein the receive end comprises: a receiver coil, a detuned circuit, a rectifier circuit, a controller, and an output end, the detuned circuit comprises a matching circuit and a grounded target branch, the matching circuit is connected to the target branch, and the target branch comprises a detuned capacitor and a switching unit; and
the method comprises:
determining a duty cycle of the switching unit based on an output voltage of the voltage output end, and controlling turn-on or turn-off of the switching unit based on the duty cycle, to perform voltage regulation on the output voltage, wherein the duty cycle is irrelevant to a main frequency of a wireless power receiving circuit.

23. The method according to claim 22, wherein the duty cycle is not an integer multiple of the main frequency.

24. The method according to claim 22 or 23, wherein when the output voltage continuously changes, the duty cycle continuously changes simultaneously.
